# EUROPEAN PATENT SPECIFICATION

(11) **EP 2 085 215 B1**
(45) Date of publication and mention of the grant of the patent: **27.03.2013**
(21) Application number: 08150772.5
(22) Date of filing: 29.01.2008
(51) Int. Cl.: B32B 15/14

(54) **High-toughness fiber-metal laminate**
Hochfeste Fasermetallbeschichtung
Stratifié de fibres métalliques grande résistance

(43) Date of publication of application: 05.08.2009
(73) Proprietor: GTM Holding B.V., 2911BB Nieuwekerk aan de Ijssel (NL); Werco Manufacturing, Inc., Broken Arrow OK 74012 (US)
(72) Inventor: Gunnink, Jan Willem, 2911BB, Nieuwerkerk aan de IJssel (NL); Evancho, Joseph William, Gibsonia, PA 15044 (US)
(74) Representative: Brouwer, Hendrik Rogier

(56) References cited:
- WO-A-2005/110736
- US-A- 5 227 216

## Description

### FIELD OF THE INVENTION

The present invention relates to a fiber-metal laminate comprising fiber-reinforced composite layers and thin metal sheets. More particularly, the invention relates to a fiber-metal laminate comprising fiber-reinforced composite layers and thin metal sheets having a high combined level of strength and toughness.

### BACKGROUND OF THE INVENTION

Generally, composite panels are manufactured from tapes of prepregs (pre-impregnated fibers) consisting of various types of reinforcing fibers impregnated with a thermoplastic or thermosetting adhesive, such as an epoxy. These thin sheets of prepreg are then arranged in various configurations and built up to a desired thickness by "laying them out" on a flat or curved surface and stacking them to the desired thickness. To produce a finished product, the stack may then be sealed from the atmosphere and drawn under a vacuum to remove entrapped air. When using thermosetting adhesives, the stack is subsequently placed in an autoclave or a press where it is heated to the required curing temperature for the required curing time and the required pressure is applied. Upon cooling to room temperature, a solid composite product is obtained.

Composites offer considerable weight advantage over other preferred materials, such as metals, that are used to manufacture various industrial components. Generally, the weight savings are obtained at the sacrifice of other important material properties such as ductility, toughness, conductivity and cold forming capability. To overcome these deficiencies, new hybrid materials called fiber-metal laminates have been developed to combine the best attributes of metal and composites. These materials are for instance described in US 4,500,589 and US 5,039,571, and are obtained by stacking alternating thin layers of metal (most preferably aluminum) and fiber-reinforced prepregs with the outermost layers being generally metal and the inner layers alternating between the metal and prepreg. The stack is cured under heat and pressure to provide the fiber-metal laminate. Fiber-metal laminates were developed to provide for lighter weight components than if the component were made of just metal alone. While the laminate does provide for lighter weight, the laminate is still heavier than pure composite components however.

US 5,039,571 discloses a fiber-metal laminate comprising at least two metallic layers and at least one intermediate layer of synthetic material reinforced with continuous glass filaments having a modulus of elasticity of at least 80 GPa. The laminate exhibits an improved blunt notch behavior, which indicates that the laminate is less influenced by a structural distortion, such as a bolt hole for instance.

WO 2005/110736A2 describes a fiber-metal laminate comprising fiber-reinforced composite layers and thin metal sheets. The reinforcing fibers used in the fiber-reinforced composite layers are organic polymeric fibers having a modulus of elasticity greater than 270 GPa. These very high modulus fibers carry most of the stress applied to the laminate and therefore permit the use of a low amount of metal in the laminate.

US 5,227,216 also describes a fiber-metal laminate comprising fiber-reinforced composite layers and thin metal sheets. The reinforcing fibers used in the fiber-reinforced composite layers are bi-directionally oriented and aramid fibers are preferred. The laminate is post-stretched along an axis that bisects the two fiber orientations.

Fiber-metal laminates are increasingly used in industries such as the transportation industry, for example in cars, trains, aircraft and spacecraft. They can be used as a reinforcing element and/or as a stiffener for wings, fuselage and tail panels and/or other skin panels for aircraft. Fiber-metal laminates of the type described provide excellent resistance to fatigue crack propagation and generally provide an improved fatigue resistance over bare aluminum alloys. The strength of fiber-metal laminates represents a "volume averaged" strength, by which is meant that the strength typically corresponds to a weighted sum of the strength of each of the metal and composite components of the laminates, each component strength value being factorized by the volume fraction of the components. This so-called rule of mixtures prediction of strength has been confirmed many times. To obtain suitable strengths for most applications, the known fiber-metal laminates generally have an elevated metal volume fraction, typically larger than 47%.

As a result of recent terrorist attacks in and around aircraft, protection of the aircraft, and therefore the people seated in the aircraft, has increasingly become an issue. In order to improve safe (air) transport of high-risk and/or suspect goods, explosion containment systems have been developed. Since fiber-metal laminates have the favorable property, among others, of having a relatively high resistance during a considerable impact or blast, such as for instance an explosion, the wall parts of the known explosion containment device are preferably manufactured from this material, and in particular from Glare ®. Although the known explosion containment device shows a good energy-absorbing capacity per unit of mass, there is a strong need to further improve this capacity. Since the energy-absorbing capacity depends on the combination of strength and toughness, there is a need to further improve the combination of strength and toughness of fiber-metal laminates.

In accordance with the present invention, a fiber-metal laminate configuration is provided that is lighter weight than the known laminate configurations, as described in US 4,500,589 and US 5,039,571 for instance.

In addition a fiber-metal laminate is provided having a level of toughness and strength that is greater than that expected from the sum of the contributing volume fraction of the metal and composite components.

In another aspect of the invention, a fiber-metal laminate is provided having an improved energy-absorbing capacity per unit of mass that is greater than the known fiber-metal laminate.

In still another aspect of the invention, an improved explosion resistant device is provided, which device is produced with the fiber-metal laminate of the invention.

### SUMMARY OF THE INVENTION

In accordance with the present invention a fiber-metal laminate is provided comprising fiber-reinforced composite layers and thin metal sheets, wherein the total metal volume fraction of the laminate is between 5 vol.% and 41 vol.%. Such a configuration is readily obtained by arranging alternating layers of prepreg and metal in such a manner that the volume fraction of metal ranges from between 5% and 41%. This may be accomplished by building a stacking sequence with the outer layers being thin sheets of prepreg and thin metal layers are symmetrically spaced in the interior.

In another preferred aspect of the invention, a fiber-metal laminate is provided comprising fiber-reinforced composite layers and thin metal sheets, wherein the total metal volume fraction of the laminate is between 10 vol.% and 35 vol.%, and most preferably between 15 vol.% and 30 vol.%.
Another aspect of the invention is to build a fiber-metal laminate having a metal volume fraction in the indicated range by having one outer layer consisting of a thin sheet of metal. Another aspect of the invention is to have both outer sheets consisting of thin metal sheets and the inner layers consisting of composite prepregs such that the metal volume fraction is in the indicated range.

In another preferred aspect of the invention, the fiber-reinforced composite layers in the fiber-metal laminate comprise substantially continuous fibers that extend mainly in one direction. Another aspect of the invention is to have arrangements as specified above, but with unidirectional layers of prepregs arranged in cross ply patterns. In still another aspect of the invention the fiber-reinforced composite layers in the fiber-metal laminate comprise a woven structure of reinforcing fibers, preferably in the form of a woven fiber prepreg.

In addition to the advantage that the fiber-metal laminate according to the invention provides for a level of toughness and strength that is greater than that expected from the sum of the contributing volume fraction of the metal and composite components, a device manufactured from the fiber-metal laminate according to the invention shows improved explosion-resistance at reduced weight. Reducing weight by lowering the metal volume fraction in the laminate may be straightforward. What is highly unexpected however is that by reducing the metal volume fraction, toughness and/or strength increase. Decreasing total mass of airborne devices is usually very relevant, since the total cost of air transport, in particular the fuel costs, are closely related to this total mass. It is generally assumed that one pound (about 0.5 kg) of dead weight represents a cost of US$ 100 or more in fuel annually. The reduction of the total weight of airborne devices, and therefore saving of transport costs, is generally of great relevance for airlines. Application of the invented fiber-metal laminate in airborne devices, such as in explosion containment systems, may result in substantial savings in (transport) cost as well as in an improved protection against explosion.

### BRIEF DESCRIPTION OF THE DRAWINGS

Figure 1 - Illustrates the effect of metal volume fraction on the stress-strain curve of fiber-metal laminates.
Figure 2 - Illustrates the effect of metal volume fraction on area under the stress-strain curve (toughness).
Figure 3 - Illustrates the relationship of tensile strength and toughness as affected by metal volume fraction in a fiber-metal laminate.
Figure 4 - Illustrates a sheet of unidirectional composite prepreg used in the construction of a fiber-metal laminate according to the invention.
Figure 5 - Illustrates a sheet of bi-directional or woven fabric prepreg used in the construction of a fiber-metal laminate according to the invention.
Figure 6 - Illustrates an embodiment of the fiber-metal laminate according to the invention showing a single sheet of metal sandwiched between alternating layers of unidirectional prepreg stacked in a cross ply arrangement.
Figure 7 - Illustrates a cross section of the fiber-metal laminate according to the invention of Figure 6.
Figure 8 - Illustrates another embodiment of the fiber-metal laminate according to the invention showing a single sheet of metal sandwiched between layers of unidirectional prepreg in a unidirectional arrangement.
Figure 9 - Illustrates a cross section of the fiber-metal laminate according to the invention of Figure 8.
Figure 10 - Illustrates still another embodiment of the fiber-metal laminate according to the invention showing a single sheet of metal on the outer surface of a number of prepreg plies.
Figure 11 - Illustrates still another embodiment of the fiber-metal laminate according to the invention showing two sheets of metal sandwiched between alternating layers of unidirectional prepreg stacked in a cross ply arrangement.
Figure 12 - Illustrates still another embodiment of the fiber-metal laminate according to the invention showing a single sheet of metal sandwiched between layers of woven fabric prepreg.

### DETAILED DESCRIPTION OF THE INVENTION

In the following description, reference is made to the accompanying drawings, which form a part hereof, and which show, by way of illustration, specific embodiments or processes in which the invention may be practiced. The present invention, however, may be practiced without the specific details or with certain alternative equivalent methods to those described herein.

The basis of the present invention is a unique arrangement of fiber-reinforced composite layers and at least one thin metal sheet. In accordance with the invention a fiber-metal laminate is provided comprising fiber-reinforced composite layers and thin metal sheets, wherein the total metal volume fraction of the laminate is between 5 vol.% and 41 vol.%, more preferably between 10 vol.% and 35 vol.%, and most preferably between 15 vol.% and 30 vol.%. The fiber-reinforced composite layers preferably comprise fibers preimpregnated with adhesive (prepreg). The system of prepreg layers and metal sheets can be, for instance, processed under heat and pressure (cured) to form a solid panel or component.

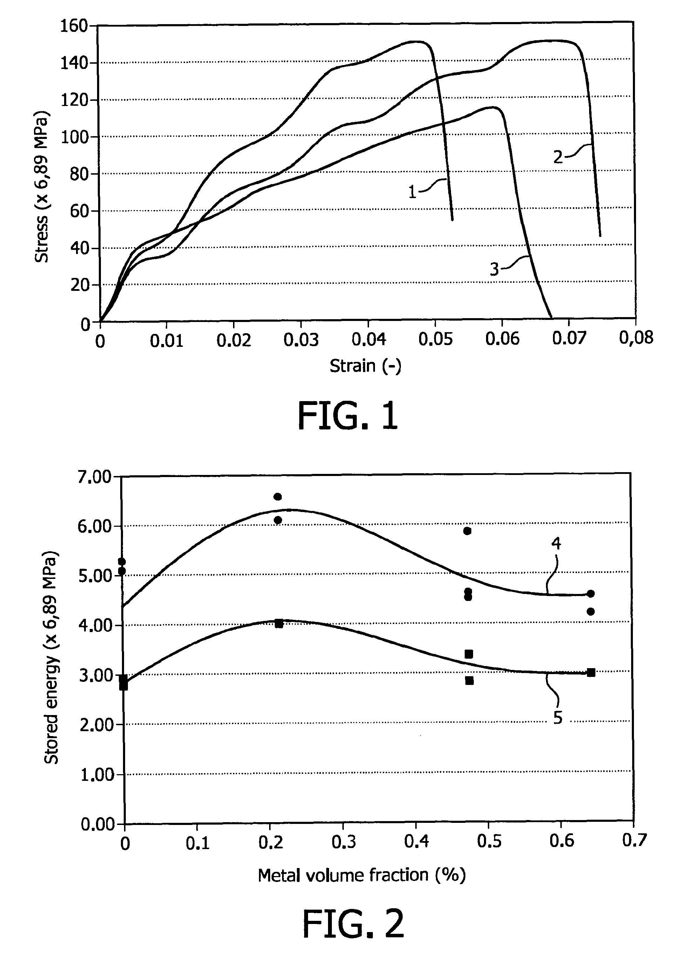

Generally, it is presumed that mechanical properties (and some physical properties) of fiber-metal laminates follow a rule of mixtures such that when fiber-reinforced composite layer prepreg and metal components are combined to form a single component, the resulting property is the sum of the products of the property of the components and the volume fraction of the component. Contrary to this behavior, it has now been discovered by the inventors that toughness of certain fiber-metal laminates made from aluminum and unidirectional, cross ply prepreg of S2-glass fibers was highest when metal volume fraction of the fiber-metal laminate was between 0% and 47% and more specifically 21 %. This behavior is illustrated in Figures 1 to 3, and does not depend on the type of fiber used. With reference to figure 1 the effect of the metal volume fraction on the stress-strain curves of fiber-metal laminates made with 2024 aluminum sheets and unidirectional, cross ply, S2-glass prepreg is shown. Curve 1 represents the stress-strain curve of a pure fiber-reinforced cross-plied composite (metal volume fraction = 0, 12 plies of S2 glass prepreg with epoxy matrix). Curve 2 represents the stress-strain curve of a fiber-metal laminate consisting of 8 layers of the same prepreg as the one used for curve 1, and a single sheet of 2024 aluminum. Curve 3 finally represents the stress-strain curve of a known Glare ® fiber-metal laminate consisting of 3 sheets of 2024 aluminum and 2 fiber-reinforced composite layers of the same prepreg as the one used for curve 1. Comparing curves 1, 2 and 3 shows that the laminate according to the invention (curve 2) is tougher than the pure composite (curve 1) and the known fiber-metal laminate (curve 3). Moreover the invented laminate has a substantially higher strain to break. Surprisingly, its strength is on the same level as the pure composite strength (about 1030 MPa or 150 ksi), whereas the rule of mixtures would dictate a lower strength. The area under a stress-strain curve represents the total specific energy that the laminate was able to store during deformation until fracture. This specific stored energy (expressed in MPa) is generally viewed as an adequate measure of toughness. The measured specific stored energy values for curves 1, 2 and 3 were 5.07 ksi (35 MPa), 5.82 ksi (40 MPa) and 7.15 ksi (50 MPa) respectively. The measured toughness of the fiber-metal laminate according to the invention is therefore at least 25% higher than that of the known fiber-metal laminate.

Figure 2 shows the toughness (stored specific energy) for a number of fiber-metal laminates with varying metal volume fraction. The upper curve 4 (and data) represents the stored specific energy obtained at a strain rate of 8.67 per second, whereas the lower curve 5 (and data) represents the stored specific energy obtained at a strain rate of 0.005 per second. The difference is attributable to viscoelastic effects: at the lower strain rates a part of the stored elastic energy is dissipated. It is clear that in the range between 5% and 41% metal volume fraction, toughness is higher than expected. The average toughness achieved in this range is 30 about 6.3 ksi (43.4 MPa) for a strain rate of 8.67 per second, whereas the average toughness of the known fiber-metal laminate is about 5 ksi (34.5 MPa).

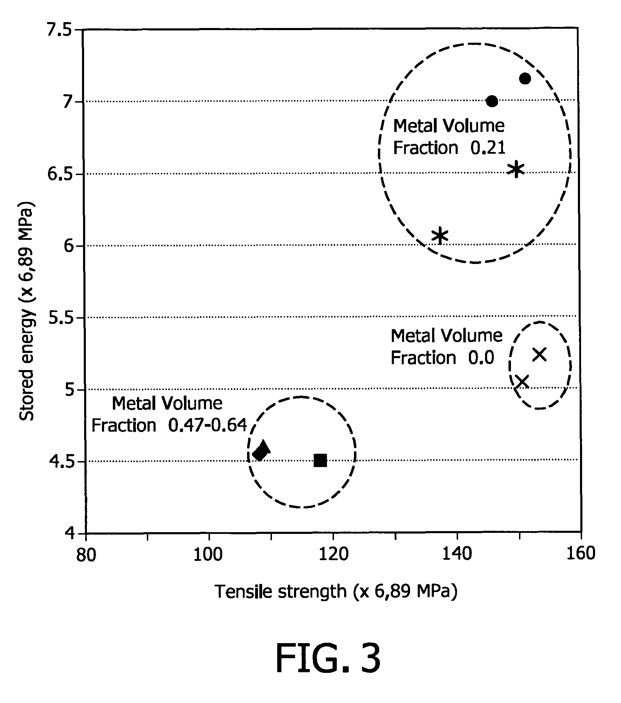

Figure 3 shows the outstanding combination of toughness and tensile strength associated with fiber-metal laminates covered by this invention and made using 2024 aluminum and unidirectional, cross plied, S2 glass fiber prepreg. The toughness-tensile strength data combination for fiber-metal laminates according to the invention are clustered in the upper right corner of the graph.

The fiber-reinforced composite layers in the fiber-metal laminates according to the invention are light and strong and comprise reinforcing fibers embedded in a polymer. The polymer may also act as a bonding means between the various layers. Reinforcing fibers that are suitable for use in the fiber-reinforced composite layers in addition to the high strength glass fibers having a tensile strength of at least 3 GPa, and a tensile modulus of at least 80 GPa include glass fibers, carbon fibers and metal fibers, and if required can also include drawn thermoplastic polymer fibers, such as aramid fibers, PBO fibers (Zylon®), M5® fibers, and ultrahigh molecular weight polyethylene or polypropylene fibers, as well as natural fibers such as flax, wood and hemp fibers, and/or combinations of the above fibers. It is also possible to use commingled and/or intermingled rovings. Such rovings comprise a reinforcing fiber and a thermoplastic polymer in fiber form. The glassfibers according to the invention include reinforcing fibers with a relatively high tensile strength and/or stiffness, of which class high strength glass fibers, such as S2-glass fibers, and HS2 and HS4 fibers (PPG) are particularly preferred. The reinforcing fibers include glass fibers having a tensile strength of at least 3 GPa, more preferred of at least 3,5 GPa, even more preferred of at least 4 GPa, and most preferred of at least 4,5 GPa. The reinforcing fibers according to the invention include glass fibers having a tensile modulus of at least 80 GPa, even more preferred of at least 85 GPa, and most preferred of at least 90 GPa. Another preferred range of glass fibers has a tensile modulus of at most 100 GPa.

Examples of suitable matrix materials for the reinforcing fibers are thermoplastic polymers such as polyamides, polyimides, polyethersulphones, polyetheretherketone, polyurethanes, polyethylene, polypropylene, polyphenylene sulphides (PPS), polyamide-imides, acrylonitrile butadiene styrene (ABS), styrene/maleic anhydride (SMA), polycarbonate, polyphenylene oxide blend (PPO), thermoplastic polyesters such as polyethylene terephthalate, polybutylene terephthalate, as well as mixtures and copolymers of one or more of the above polymers. The preferred thermoplastic polymers further comprise an almost amorphous thermoplastic polymer having a glass transition temperature Tg of greater than 140°C, preferably greater than 160°C, such as polyarylate (PAR), polysulphone (PSO), polyethersulphone (PES), polyetherimide (PEI) or polyphenylene ether (PPE), and in particular poly-2,6 dimethyl phenylene ether. According to the invention, it is also possible to apply a semicrystalline or paracrystalline thermoplastic polymer having a crystalline melting point Tₘ of greater than 170°C, preferably greater than 270°C, such as polyphenylene sulphide (PPS), polyetherketones, in particular polyetheretherketone (PEEK), polyetherketone (PEK) and polyetherketoneketone (PEKK), "liquid crystal polymers" such as XYDAR® by Dartco derived from monomers biphenol, terephthalic acid and hydrobenzoic acid. Suitable matrix materials also comprise thermosetting polymers such as epoxies, unsaturated polyester resins, melamine/formaldehyde resins, phenol/formaldehyde resins, polyurethanes, etcetera.

In the laminate according to the invention, the fiber-reinforced composite layer comprises if desired substantially continuous fibers that extend in two almost orthogonal directions (so called isotropic woven fabric). However it is preferable for the fiber-reinforced composite layer to comprise substantially continuous fibers that mainly extend in one direction (so called UD material). It is advantageous to use the fiber-reinforced composite layer in the form of a pre-impregnated semi-finished product. Such a "prepreg" shows generally good mechanical properties after curing thereof, among other reasons because the fibers have already been wetted in advance by the matrix polymer.

Fiber-metal laminates may be obtained by connecting a number of metal layers and intermediary fiber-reinforced composite layers to each other by means of heating under pressure and then cooling them. The fiber-metal laminates of the invention have good specific mechanical properties (properties per unit of density). Metals that are particularly appropriate to use include steel (alloys) and light metals, such as titanium and in particular aluminium alloys. Suitable aluminum alloys are based on alloying elements such as copper, zinc, magnesium, silicon, manganese, and lithium. Small quantities of chromium, titanium, scandium, zirconium, lead, bismuth and nickel may also be added, as well as iron. Preferred aluminum alloys include aluminum copper alloys (2xxx series), aluminum magnesium alloys (5xxx series), aluminum silicon magnesium alloys (6xxx series), aluminum zinc magnesium alloys (7xxx series), aluminum lithium alloys (8xxx series), as well as aluminum magnesium scandium alloys. Particularly preferred aluminum alloys include 2024, 7075, 7475 or 6013 alloys. Also, aluminum magnesium alloys with a magnesium content lower than 6 % by weight are preferred, particularly in combination with aluminum zinc magnesium alloys of the 7xxx series. In other respects, the invention is not restricted to laminates using these metals, so that if desired other aluminum alloys and for example steel or another suitable structural metal can be used. The laminate of the invention may also comprise metal sheets of different alloys.

Although the thickness of the composite layers and the thin metal sheets may be varied within a large range, in a preferred embodiment the thickness of the metal sheets is between 0.2 mm and 1.5 mm, and more preferably between 0.3 and 0.8 mm. Although applying thinner metal sheets per se leads to higher costs and is therefore not naturally obvious, it turns out that applying them in the laminate leads to an improvement in the properties of the laminate. The laminate according to the invention is additionally advantageous in that only a few thin metal sheets have to be applied in the laminate to be sufficient to achieve these improved properties. The same advantages are achieved if the thickness of the fiber-reinforced composite layers in the laminate is less than 0.8 mm, and preferably inclusive between 0.2 and 0.6 mm.

A fiber-metal laminate according to the invention will generally be formed by a number of metal sheets and a number of fiber-reinforced composite layers, with the proviso that such laminate comprises less than 41% by volume of metal. The outer layers of the fiber-metal laminate may comprise metal sheets and/or fiber-reinforced composite layers. The number of metal layers may be varied over a large range and is at least one. In a particularly preferred fiber-metal laminate, the number of metal layers is two, three or four, between each of which fiber-reinforced composite layers have preferably been applied. Depending on the intended use and requirements set, the optimum number of metal sheets can easily be determined by the person skilled in the art. The total number of metal sheets will generally not exceed 20, although the invention is not restricted to laminates with a maximum number of metal layers such as this. According to the invention, the number of metal sheets is preferably between 1 and 10, and more preferably between 1 and 5, with the metal sheets preferably having a tensile strength of at least 0.20 GPa.

To prevent the laminate from warping as a result of internal tensions, the laminate according to the invention can be structured symmetrically with respect to a plane through the center of the thickness of the laminate. To restrict galvanic corrosion, a laminate according to the invention having aluminum alloy sheets can be designed such that if a layer of electrically conductive fibers, for example carbon fibers, is applied, it is covered on either side with a layer of electrically non-conductive fibers, for example glass fibers.

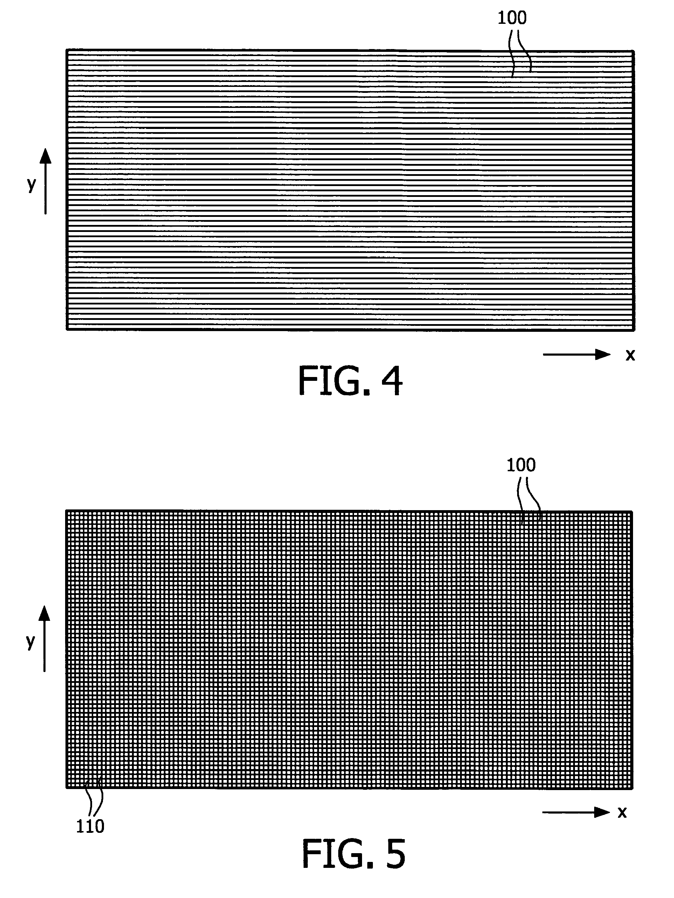

Fiber-metal laminate configurations according to the invention are readily obtained by arranging (alternating) layers of fiber-reinforced composite, preferably in the form of prepregs, and at least one thin metal sheet in such a manner that the volume fraction of metal ranges from between 5 vol.% and 41 vol.%, more preferably between 10 vol.% and 35 vol.%, and most preferably between 15 vol.% and 30 vol.%. The fiber-metal laminates can be designed in many different arrangements. Figures 4 and 5 schematically show single sheets of prepreg that can be used to construct the configurations covered by this invention. Figure 4 represents a unidirectional prepreg with fibers 100 running in one direction only (denoted X-direction in figures 4 and 5), whereas figure 5 represents a woven fabric prepreg with fibers (100, 110) running in two perpendicular directions X and Y, corresponding to the warp and weft directions of the woven fabric.

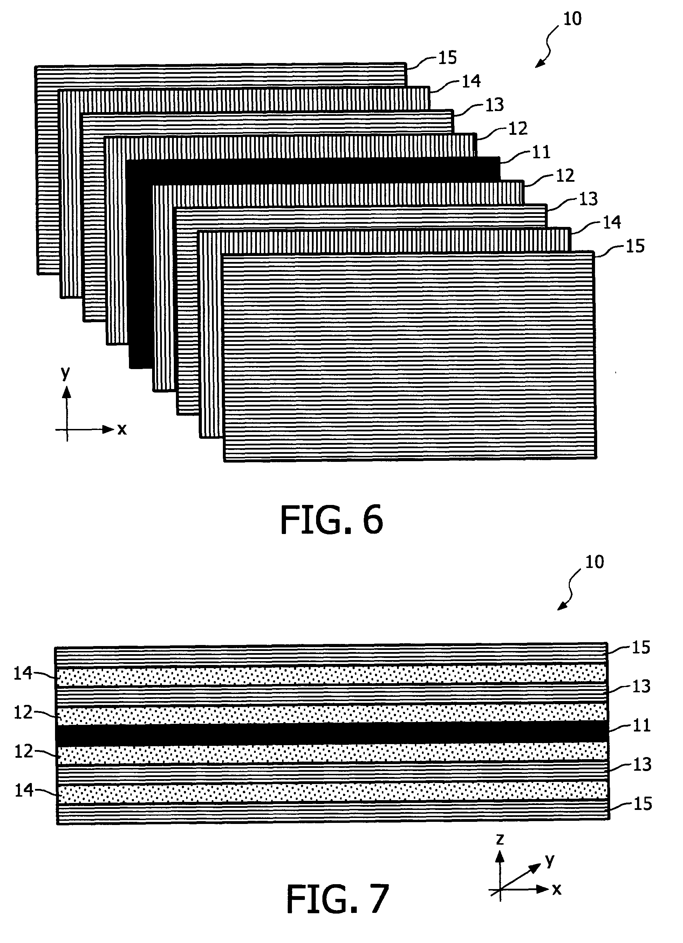

Figure 6 shows an embodiment (in exploded view) of the fiber-metal laminate 10 according to the invention in the form of a flat rectangular sheet. Figure 7 shows the same laminate in a cross-sectional view. In the exemplary embodiment shown, the laminate 10 comprises one metal sheet 11 having a thickness of about 0.2 mm, the sheet comprising an aluminum alloy, which in this case is 2024-T3. The metal sheet 11 is securely interconnected with four fiber-reinforced composite layers 12-15 on each side. Each fiber-reinforced composite layer 12-15 comprises and is formed of S2-glass fibers impregnated with an epoxy resin, having a fiber volume content of approximately 60 vol.%. The prepreg layers 12-15 with a thickness of approximately 0.25 mm are formed of (unidirectional) S2-glass fibers extending parallel to each other in the direction indicated. As shown in figure 6, layers 12 and 14 have fibers directed in the Y-direction, whereas the fibers in layers 13 and 15 extend in the X-direction of the laminate. Such a cross-ply arrangement yields the same properties in the X- and Y-direction.

Laminate 10 is produced by preparing a stack of a first set of layers 12-15, metal sheet 11 and another set of layers 12-15 in the sequence shown in Figure 6, for example on a flat mold. After lamination, the overall structure 10 is cured at a temperature suitable for the epoxy resin, for instance in an autoclave, and preferably under vacuum in order to expel entrapped air from the laminate. For most applications, an epoxy resin with a high glass transition temperature will be most suitable. Any epoxy resin may be used however. Epoxy resins are generally cured at or slightly above room temperature, at a temperature of approximately 125°C or at a temperature of approximately 175°C. After curing under pressure a consolidated laminate is obtained.

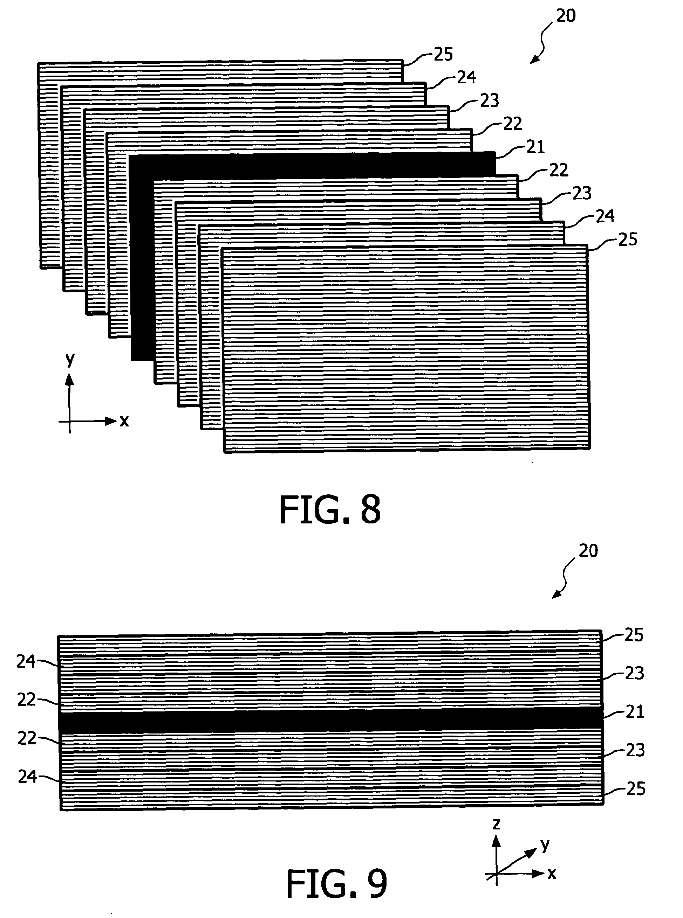

Figure 8 shows another embodiment (in exploded view) of a fiber-metal laminate 20 according to the invention in the form of a flat rectangular sheet. Figure 9 shows the same laminate in a cross-sectional view. In the exemplary embodiment shown, the laminate 20 comprises one metal sheet 21 having a thickness of about 0.2 mm, the sheet comprising an aluminum alloy, which in this case is 2024-T3. The metal sheet 21 is securely interconnected with four fiber-reinforced composite layers 22-25 on each side. Each fiber-reinforced composite layer 22-25 comprises and is formed of S2-glass fibers impregnated with an epoxy resin, having a fiber volume content of approximately 60 vol.-%. The prepreg layers 22-25 with a thickness of approximately 0.25 mm are formed of (unidirectional) S2-glass fibers extending parallel to each other in the direction indicated. As shown in figure 8, all layers 22-25 have fibers directed in the X-direction. Such a unidirectional arrangement yields different properties in the X- and Y-direction (anisotropy). Laminate 20 is produced in the same way as laminate 10, as described above.

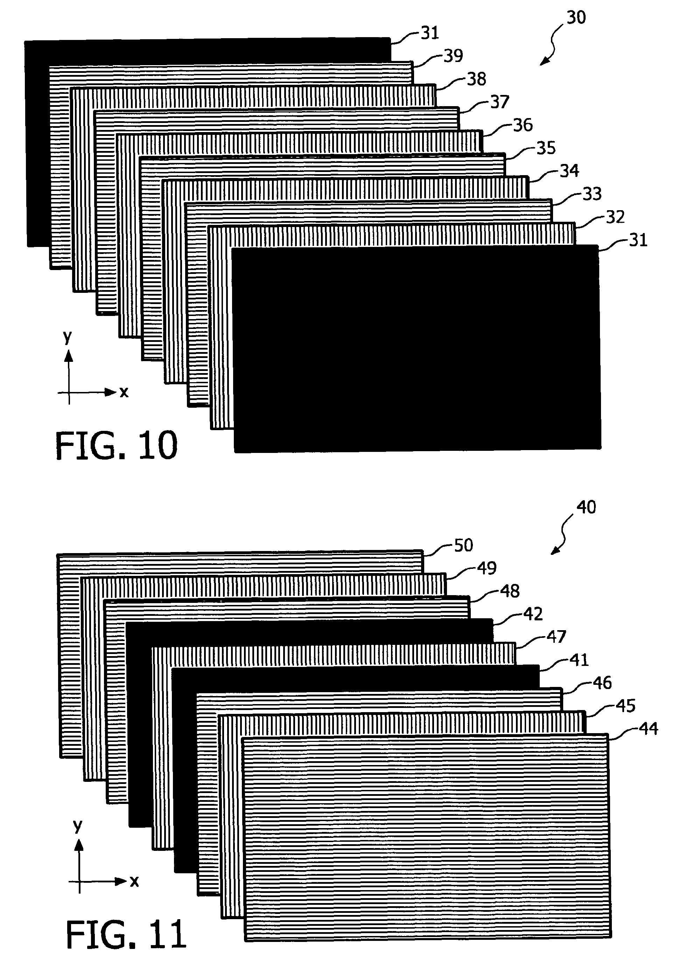

Figure 10 shows still another embodiment (in exploded view) of a fiber-metal laminate according to the invention in the form of a flat rectangular sheet. In the exemplary embodiment shown, the laminate 30 comprises two metal sheets 31 positioned on the outer surfaces of the laminate, sheet 31 having a thickness of about 0.2 mm and comprising an aluminum alloy, which in this case is 2024-T3. The metal sheets 31 are securely interconnected with eight fiber-reinforced composite layers 32-39 on the back side. Each fiber-reinforced composite layer 32-39 comprises and is formed of S2-glass fibers impregnated with an epoxy resin, having a fiber volume content of approximately 60 vol.-%. The prepreg layers 32-39 with a thickness of approximately 0.25 mm are formed of (unidirectional) S2-glass fibers extending parallel to each other in the direction indicated. As shown in figure 10 layers 32, 34, 36 and 38 have fibers directed in the Y-direction, whereas the fibers in layers 33, 35, 37 and 39 extend in the X-direction of the laminate. Such a cross-ply arrangement yields the same properties in the X- and Y-direction. Laminate 30 is produced in the same way as laminate 10, as described above.

Figure 11 shows still another embodiment (in exploded view) of a fiber-metal laminate according to the invention in the form of a flat rectangular sheet. In the exemplary embodiment shown, the laminate 40 comprises two metal sheets 41 and 42, symmetrically positioned in the Z-direction with respect to seven fiber-reinforced composite layers 44-50. Metal sheets (41, 42) have a thickness of about 0.2 mm and comprise a 2024-T3 aluminum alloy. The metal sheets (41, 42) are securely interconnected with seven fiber-reinforced composite layers 44-50 in de sequence indicated in figure 11. Each fiber-reinforced composite layer 44-50 comprises and is formed of S2-glass fibers impregnated with an epoxy resin, having a fiber volume content of approximately 60 vol.-%. The prepreg layers 44-50 with a thickness of approximately 0.25 mm are formed of (unidirectional) S2-glass fibers extending parallel to each other in the direction indicated. As shown in figure 11 layers 45, 47 and 49 have fibers directed in the Y-direction, whereas the fibers in layers 44, 46, 48 and 50 extend in the X-direction of the laminate. Such a cross-ply arrangement yields the same properties in the X and Y-direction. Laminate 40 is produced in the same way as laminate 10, as described above.

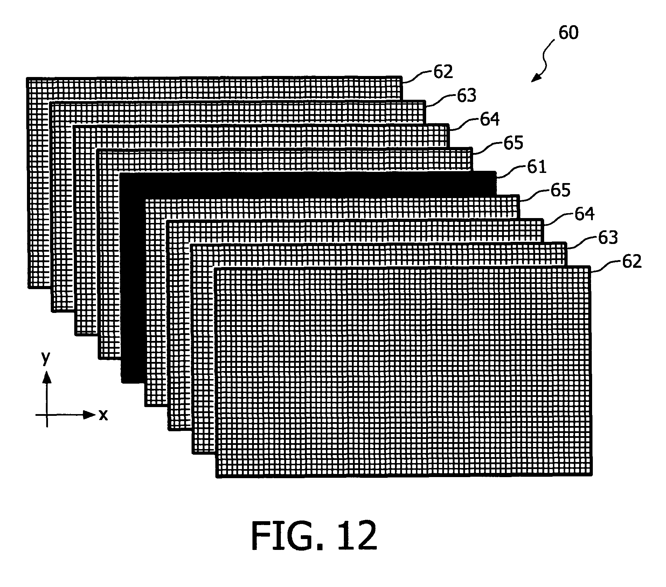

Finally, Figure 12 shows still another embodiment (in exploded view) of a fiber-metal laminate 60 according to the invention in the form of a flat rectangular sheet. In the exemplary embodiment shown, the laminate 60 comprises one metal sheet 61, centrally disposed between two sets of four fiber-reinforced composite layers 62-65. Metal sheet 61 has a thickness of about 0.2 mm and comprise a 2024-T3 aluminum alloy. The metal sheet 61 is securely interconnected with the eight fiber-reinforced composite layers 62-65 in the sequence indicated in figure 12. Each fiber-reinforced composite layer 62-65 comprises and is formed of a square woven fabric of S2-glass fibers impregnated with an epoxy resin, having a fiber volume content of approximately 50 vol.-%. Such a woven fabric arrangement yields about the same properties in the X- and Y-direction. Laminate 60 is produced in the same way as laminate 10, as described above.

Figures 4 through 12 show various possible fiber-metal laminate configuration covered by this invention. These figures are meant to show examples of configurations but do not limit the wide range of possible configuration covered by this invention. The laminate is advantageously used in constructing impact resistant objects, such as explosion resistant aircraft luggage containers and wing leading edges.

## Claims

1. A fiber-metal laminate comprising fiber-reinforced composite layers and thin metal sheets, wherein the total metal volume fraction of the laminate is between 5 vol.% and 41 vol.%, and wherein the fiber-reinforced composite layers comprise high strength glass fibers having a tensile strength of at least 3 GPa, and a tensile modulus of at least 80 GPa.

2. Fiber-metal laminate according to claim 1, wherein the total metal volume fraction of the laminate is between 10 vol.% and 35 vol.%.

3. Fiber-metal laminate according to claim 2, wherein the total metal volume fraction of the laminate is between 15 vol.% and 30 vol.%.

4. Fiber-metal laminate according to anyone of the preceding claims, wherein the thickness of the thin metal sheets ranges between 0.2 mm (0.008 inches) and 1.5 mm (0.060 inches), and more preferably between 0.3 mm (0.012 inches) and 0.8 mm (0.032 inches).

5. Fiber-metal laminate according to anyone of the preceding claims, wherein the metal is selected from steel alloys, light metal alloys, titanium alloys, and aluminum alloys in particular.

6. Fiber-metal laminate according to anyone of the preceding claims, wherein the aluminum alloy comprises aluminum copper alloys (2xxx series), aluminium magnesium alloys (5xxx series), aluminum silicon magnesium alloys (6xxx series), aluminum zinc magnesium alloys (7xxx series), aluminum lithium alloys (8xxx series), and aluminium magnesium scandium alloys.

7. Fiber-metal laminate according to claim 5, wherein the aluminum alloy is selected from the group of aluminum alloys of type 2024, 7075, 7475 and/or 6013, and more preferably from the aluminum alloy 5xxx-series.

8. Fiber-metal laminate according to anyone of the preceding claims, wherein the fiber-reinforced composite layers in addition comprise fibers formed out of polymers selected from the group of aromatic polyamides (aramids), poly(p-phenylene-2, 6-benzobisoxazole) (PBO), poly(2,6-diimidazo-(4,5b-4',5'e)pyridinylene-1,4(2,5-dihydroxy)phenylene), and/or UHMWPE.

9. Fiber-metal laminate according to anyone of the preceding claims, wherein the fiber reinforced composite layers comprise substantially continuous fibers that extend mainly in one direction.

10. Fiber-metal laminate according to anyone of the preceding claims, wherein the fiber reinforced composite layers comprise substantially continuous fibers that extend mainly in two perpendicular directions.

11. Fiber-metal laminate according to anyone of the preceding claims, wherein the fiber-reinforced composite layers comprise a woven structure of reinforcing fibers.

12. Fiber-metal laminate according to anyone of the preceding claims, wherein one outer layer is metal.

13. Fiber-metal laminate according to anyone of the preceding claims, wherein both outer layers are metal.

14. Fiber-metal laminate according to anyone of the preceding claims, wherein both outer layers are comprised of fiber-reinforced composite and one or more inner layers are metal.

15. Impact resistant device, such as explosion resistant aircraft luggage containers and wing leading edges, comprising a fiber-metal laminate according to anyone of the preceding claims.

## Patentansprüche

1. Faser-Metall-Laminat, aufweisend faserverstärkte Verbundschichten und Dünnmetallbleche, wobei der gesamte Metallvolumenanteil des Laminats zwischen 5 Vol.% und 41 Vol.% liegt und wobei die faserverstärkten Verbundschichten hochfeste Glasfasern mit einer Zugfestigkeit von mindestens 3 GPa und einem Elastizitätsmodul von mindestens 80 GPa aufweisen.

2. Faser-Metall-Laminat nach Anspruch 1, wobei der gesamte Metallvolumenanteil des Laminats zwischen 10 Vol.% und 35 Vol.% liegt.

3. Faser-Metall-Laminat nach Anspruch 2, wobei der gesamte Metallvolumenanteil des Laminats zwischen 15 Vol.% und 30 Vol.% liegt.

4. Faser-Metall-Laminat nach jedem der vorherigen Ansprüche, wobei die Dicke der Dünnmetallbleche zwischen 0,2 mm und 1,5 mm und vorzugsweise zwischen 0,3 mm und 0,8 mm liegt.

5. Faser-Metall-Laminat nach jedem der vorherigen Ansprüche, wobei das Metall insbesondere aus Stahllegierungen, Leichtmetalllegierungen, Titanlegierungen und Aluminiumlegierungen ausgewählt wird.

6. Faser-Metall-Laminat nach jedem der vorherigen Ansprüche, wobei die Aluminiumlegierung Aluminium-Kupfer-Legierungen (Serie 2xxx), Aluminium-Magnesium-Legierungen (Serie 5xxx), Aluminium-Silizium-Magnesium-Legierungen (Serie 6xxx), Aluminium-Zink-Magnesium-Legierungen (Serie 7xxx), Aluminium-Lithium-Legierungen (Serie 8xxx) und Aluminium-Magnesium-Skandium-Legierungen aufweist.

7. Faser-Metall-Laminat nach Anspruch 5, wobei die Aluminiumlegierung aus der Gruppe der Aluminiumlegierungen vom Typ 2024,7075, 7475 und/oder 6013 und vorzugsweise aus der Serie der Aluminiumlegierungen 5xxx ausgewählt wird.

8. Faser-Metall-Laminat nach jedem der vorherigen Ansprüche, wobei die faserverstärkten Verbundschichten zusätzlich Fasern aufweisen, die aus Polymeren bestehen, die aus der Gruppe der aromatischen Polyamide (Aramide), der Poly(p-phenyl-2, 6-benzobisoxazole) (PBO), der Poly(2,6diimidazo-(4,5b-4',5'e)pyridinyle-1,4(2,5-dihydroxy)phenyl) und/oder UHMWPE ausgewählt werden.

9. Faser-Metall-Laminat nach jedem der vorherigen Ansprüche, wobei die faserverstärkten Verbundschichten im Wesentlichen Endlosfasern aufweisen, die sich hauptsächlich in eine Richtung erstrecken.

10. Faser-Metall-Laminat nach jedem der vorherigen Ansprüche, wobei die faserverstärkten Verbundschichten im Wesentlichen Endlosfasern aufweisen, die sich hauptsächlich in zwei zueinander senkrechte Richtungen erstrecken.

11. Faser-Metall-Laminat nach jedem der vorherigen Ansprüche, wobei die faserverstärkten Verbundschichten eine Gewebestruktur aus Verstärkungsfasern aufweisen.

12. Faser-Metall-Laminat nach jedem der vorherigen Ansprüche, wobei eine Außenschicht aus Metall besteht.

13. Faser-Metall-Laminat nach jedem der vorherigen Ansprüche, wobei beide Außenschichten aus Metall bestehen.

14. Faser-Metall-Laminat nach jedem der vorherigen Ansprüche, wobei beide Außenschichten faserverstärktes Verbundmaterial aufweisen und eine oder mehrere Innenschichten aus Metall bestehen.

15. Stoßfeste Einheit, z.B. explosionsbeständige Flugzeug-Frachtbehälter und Flügelvorderkanten, aufweisend ein Faser-Metall-Laminat nach jedem der vorherigen Ansprüche.

## Revendications

1. Stratifié fibres-métal comprenant des couches de composite renforcé par des fibres et des feuilles métalliques minces, dans lequel la fraction volumique totale du métal dans le stratifié est comprise entre 5 % en vol. et 41 % en vol., et dans lequel les couches de composite renforcé par des fibres comprennent des fibres de verre à haute résistance ayant une résistance à la traction d'au moins 3 GPa et un module en traction d'au moins 80 GPa.

2. Stratifié fibres-métal selon la revendication 1, dans lequel la fraction volumique totale du métal dans le stratifié est comprise entre 10 % en vol. et 35 % en vol.

3. Stratifié fibres-métal selon la revendication 2, dans lequel la fraction volumique totale du métal dans le stratifié est comprise entre 15 % en vol. et 30 % en vol.

4. Stratifié fibres-métal selon l'une quelconque des revendications précédentes, dans lequel l'épaisseur des feuilles métalliques minces est comprise entre 0,2 mm (0,008 pouce) et 1,5 mm (0,060 pouce), de préférence entre 0,3 mm (0,012 pouce) et 0,8 mm (0,032 pouce).

5. Stratifié fibres-métal selon l'une quelconque des revendications précédentes, dans lequel le métal est sélectionné parmi des alliages d'acier, des alliages métalliques légers, des alliages de titane et des alliages d'aluminium en particulier.

6. Stratifié fibres-métal selon l'une quelconque des revendications précédentes, dans lequel l'alliage d'aluminium comprend des alliages aluminium-cuivre (série 2xxx), des alliages aluminium-magnésium (série 5xxx), des alliages aluminium-silicium-magnésium (série 6xxx), des alliages aluminium-zinc-magnésium (série 7xxx), des alliages aluminium-lithium (série 8xxx) et des alliages aluminium-magnésium-scandium.

7. Stratifié fibres-métal selon la revendication 5, dans lequel l'alliage d'aluminium est sélectionné dans le groupe des alliages d'aluminium du type 2024, 7075, 7475 et/ou 6013, et de préférence parmi les alliages d'aluminium de la série 5xxx.

8. Stratifié fibres-métal selon l'une quelconque des revendications précédentes, dans lequel les couches de composite renforcé par des fibres comprennent en outre des fibres faites en polymères sélectionnés dans le groupe comprenant des polyamides aromatiques (aramides), le poly(p-phénylène-2,6-benzobisoxazole) (PBO), le poly(2,6-diimidazo-(4,5b-4',5'e)pyridinylène-1,4(2,5-dihydroxy)phénylène), et/ou l'UHMWPE (polyéthylène de poids moléculaire ultra-élevé).

9. Stratifié fibres-métal selon l'une quelconque des revendications précédentes, dans lequel les couches de composite renforcé par des fibres comprennent des fibres sensiblement continues qui s'étendent principalement dans une direction.

10. Stratifié fibres-métal selon l'une quelconque des revendications précédentes, dans lequel les couches de composite renforcé par des fibres comprennent des fibres sensiblement continues qui s'étendent principalement dans deux directions perpendiculaires.

11. Stratifié fibres-métal selon l'une quelconque des revendications précédentes, dans lequel les couches de composite renforcé par des fibres comprennent une structure tissée en fibres de renfort.

12. Stratifié fibres-métal selon l'une quelconque des revendications précédentes, dans lequel une couche extérieure est en métal.

13. Stratifié fibres-métal selon l'une quelconque des revendications précédentes, dans lequel les deux couches extérieures sont en métal.

14. Stratifié fibres-métal selon l'une quelconque des revendications précédentes, dans lequel les deux couches extérieures sont constituées de composite renforcé par des fibres et une ou plusieurs couches intérieures sont en métal.

15. Dispositif résistant aux impacts, tel que des conteneurs aériens à bagages résistants aux explosions et des bords d'attaque d'ailes, comprenant un stratifié fibres-métal selon l'une quelconque des revendications précédentes.
